# FASCICULE DE BREVET EUROPEEN

(11) **EP 2 625 547 B1**
(45) Date de publication et mention de la délivrance du brevet: **25.02.2015**
(21) Numéro de dépôt: 11767436.6
(22) Date de dépôt: 07.10.2011
(51) Int. Cl.: G01T 1/178

(54) **PROCEDE DE DETECTION UTILISANT UN DETECTEUR ALPHA ELECTROCHIMIQUEMENT ASSISTE POUR LA MESURE NUCLEAIRE EN MILIEU LIQUIDE**
NACHWEISVERFAHREN ANHAND EINES ELEKTROCHEMISCH GESTÜTZTEN ALPHA-DETEKTORS FÜR NUKLEARE MESSUNGEN IN EINEM FLÜSSIGEN MEDIUM
DETECTION METHOD USING AN ELECTROCHEMICALLY-ASSISTED ALPHA DETECTOR FOR NUCLEAR MEASUREMENT IN A LIQUID MEDIUM

(30) Priorité: 07.10.2010 FR 1058150
(43) Date de publication de la demande: 14.08.2013
(73) Titulaire: Commissariat à l'Énergie Atomique et aux Énergies Alternatives, 75015 Paris (FR)
(72) Inventeur: DE SANOIT, Jacques, F-94150 Rungis (FR); MER-CALFATI, Christine, F-91430Vauhallan (FR); POMORSKI, Michal, F-91300 Massy-Palaiseau (FR)
(74) Mandataire: Ilgart, Jean-Christophe
(86) Numéro de dépôt international: PCT/EP2011/067582
(87) Numéro de publication internationale: WO 2012/045872

(56) Documents cités:
- FR-A1- 2 917 229
- KOZLOV S F; KONOROVA E A; KRAPIVIN M I; NADEIN V A; YUDINA V G: "Usage of diamond detectors as immersed alpha-counters", IEEE TRANSACTIONS ON NUCLEAR SCIENCE, vol. 24, no. 1, février 1977 (1977-02), pages 242-243, XP002638075, ISSN: 0018-9499
- MER C ET AL: "Diamond detectors for alpha monitoring in corrosive media for nuclear waste activity monitoring", 2009 1ST INTERNATIONAL CONFERENCE ON ADVANCEMENTS IN NUCLEAR INSTRUMENTATION, MEASUREMENT METHODS AND THEIR APPLICATIONS : ANIMMA 2009 ; MARSEILLE, FRANCE, 7 - 10 JUNE 2009, IEEE, PISCATAWAY, NJ, 7 juin 2009 (2009-06-07), pages 1-4, XP031704432, ISBN: 978-1-4244-5207-1

## Description

### DOMAINE TECHNIQUE

L'invention se rapporte à un procédé permettant la détection et la mesure d'émetteurs de particules α présents en solution, notamment des actinides et du polonium. Plus particulièrement, l'invention se rapporte à un procédé de détection utilisant un détecteur alpha électrochimiquement assisté pour la mesure nucléaire en milieu liquide.

### ÉTAT DE LA TECHNIQUE ANTÉRIEURE

Comme toute industrie inhérente à l'activité humaine, l'industrie nucléaire génère des sous-produits solides, gazeux ou liquides. En particulier, l'industrie nucléaire produit de grandes quantités d'effluents, qui peuvent être inactifs ou, au contraire, faiblement ou fortement radioactifs. On rappelle qu'un effluent désigne tout rejet liquide véhiculant une charge polluante (dissoute ou sous forme de particules) nuisible à l'environnement.

Les effluents qui sont faiblement radioactifs sont filtrés, dilués et contrôlés avant d'être dispersés dans l'environnement. Les conditions de rejet sont bien évidemment rigoureusement réglementées et contrôlées par une autorité de sureté compétente, de manière à garantir un très faible impact sur l'environnement et une parfaite innocuité sanitaire. A titre d'exemple, l'arrêté préfectoral n°2009.PREF.DCI 2/BE 0172 du 25 septembre 2009 réglemente désormais les rejets radioactifs des installations classées pour la protection de l'environnement (ICPE), ainsi que les limites annuelles autorisées pour les rejets d'effluents liquides. C'est ainsi que le centre de Saclay du Commissariat à l'Energie Atomique et aux énergies alternatives est autorisé à rejeter, au maximum, une activité totale en émetteurs alpha de 0,20 GBq par an.

Dans le cadre de l'invention, on s'intéresse à la quantification d'émetteurs de particules alpha particuliers, tels que les actinides et le polonium, présents dans des solutions aqueuses, que celles-ci soit issues de solutions de lavage des sols de laboratoires en zone contrôlée, de condensats d'évaporation d'effluents ou autres.

Afin de déterminer quelle est la quantité d'actinides et/ou de polonium qui est présente dans une solution aqueuse, il est possible de réaliser un prélèvement de la solution à analyser et de comparer la radioactivité de ce prélèvement avec la radioactivité de sources étalons.

L'inconvénient de cette manière de procéder est qu'elle nécessite de très longues opérations de séparation, purification et préparation des échantillons et des sources étalons pour le comptage et la spectrométrie des actinides ou du polonium.

Dans de telles conditions opératoires, le résultat de mesure, à partir du moment où un prélèvement est effectué dans un but analytique, n'est connu qu'après plusieurs jours.

Or, étant donné que l'autorité de sûreté compétente ne donne son accord d'évacuation des effluents qu'après avoir eu communication d'un résultat de mesure conforme aux normes de rejets en vigueur, on peut comprendre qu'il est particulièrement intéressant de vouloir raccourcir de manière drastique les délais de connaissance de ces résultats.

Une autre manière de procéder consiste à réaliser la mesure de l'activité alpha directement dans la solution à analyser, sans réaliser de prélèvement, en immergeant un détecteur de rayonnement alpha dans la solution contenant les ions des actinides.

Cette manière de procéder n'est pas nouvelle. En effet, dès 1977, le diamant naturel a été testé avec succès comme matériau détecteur de particules alpha en immersion dans une solution de ²³⁹Pu en milieu acide nitrique concentré (2 M) et ceci dans une gamme de concentrations allant de 10 à 100 mg/L (voir le document **[1]** référencé à la fin de la description). La détection des particules alpha et la mesure de la hauteur des impulsions sont obtenues en polarisant le détecteur diamant à 300 V et en utilisant un amplificateur de signal et un analyseur multicanaux.

L'avantage de cette technique est qu'elle permet de s'affranchir du délicat problème de la préparation de sources-alpha étalons. Cependant, cette technique est limitée en performances : en effet, elle ne permet pas de mesurer des activités alpha volumiques inférieures à 20 kBq/cm³, car le signal enregistré pour de telles activités volumiques n'est pas exploitable analytiquement.

D'autres travaux ont été menés sur l'analyse directe en solution de l'activité alpha à l'aide de détecteurs à barrière de surface, notamment dans les travaux publiés par Feist (document **[2]**) ou encore par Krapivin (document **[3]**). En dépit d'un potentiel apparemment prometteur, ces travaux n'ont jamais abouti industriellement, à cause du manque de stabilité de ce type de détecteur.

On trouve également dans la littérature des essais de mesure directe de radioactivité alpha par immersion de détecteurs dans des solutions acides provenant de l'industrie du retraitement des combustibles nucléaires grâce à des scintillateurs de verre (document **[4]**). Malheureusement, cette technique a été très rapidement abandonnée de part sa forte sensibilité aux interférences avec les rayonnements β et γ provenant de produits de fission initialement présents dans la solution.

Par la suite, la fabrication de couches de diamant de synthèse sur des substrats en silicium, notamment par la méthode CVD (de l'anglais « Chemical Vapour Déposition »), a permis d'envisager la réalisation de systèmes de détection intéressants pour l'analyse directe en solution de l'activité alpha grâce à ce matériau novateur utilisable en milieu hostile

(car corrosif et irradiant) (document **[5]**). Mais ces systèmes de mesure ne permettent pas de mesurer des activités alpha volumiques inférieures à 0,4 kBq/cm³.

Enfin, plus récemment, des détecteurs de type PIPS (de l'anglais « Passive Ion implant Planar Silicon ») ont été utilisés pour détecter des particules alpha à la surface d'un liquide (document **[6]**). Même si de tels détecteurs ne font pas partie véritablement de la famille des détecteurs immergés, la finalité expérimentale reste la même, à savoir une mesure directe sans préparation de sources étalons, à laquelle est ajoutée l'élimination du risque de corrosion du détecteur par une solution acide de radionucléides. Ce type de détecteur a cependant montré une sensibilité aux rayonnements β et γ, nécessitant ainsi une discrimination en énergie pour extraire l'activité alpha des données expérimentales.

Au vu des problèmes rencontrés dans l'art antérieur, les inventeurs se sont fixé comme but de concevoir un procédé de détection qui soit capable de mesurer l'activité alpha d'un milieu liquide, et ceci, même pour des activités α volumiques inférieures à 0, 025 Bq/cm³. Et même si il a déjà été envisagé dans la littérature d'associer les avantages du diamant pour ses propriétés de détection avec ses propriétés électrochimiques (voir MER C et al., "Diamond detectors for alpha monitoring in corrosive media for nuclear waste activity monitoring", ANIMMA 2009), aucune solution n'a, jusqu'à présent, été proposée.

### EXPOSE DE L'INVENTION

Ce but est atteint grâce à un procédé de détection de l'activité alpha d'un milieu liquide contenant des ions d'au moins un actinide et/ou des ions de polonium, ledit procédé comprenant les étapes successives suivantes :
a) la fourniture d'un système de détection in situ de particules alpha dans un milieu liquide, qui comprend :
   - un détecteur de particules alpha comportant un ensemble formé d'un substrat en un matériau semiconducteur intrinsèque qui est pris en sandwich entre deux couches en matériaux électriquement conducteurs formant respectivement un premier et un deuxième contact électrique, le premier contact étant destiné à être en contact avec le milieu liquide et étant en diamant dopé au bore ;
   - une contre-électrode en matériau électriquement conducteur, destinée à être mise en contact avec le milieu liquide ; et
   - des moyens pour connecter ladite contre-électrode et le premier contact électrique du détecteur du système de détection à une source de courant électrique afin de permettre la circulation des ions, présents dans le milieu liquide, de la contre-électrode vers le premier contact électrique du détecteur ou vice versa ;
b) la mise en contact du premier contact du détecteur du système de détection avec le milieu liquide et la mise en contact de la contre-électrode du système de détection avec le milieu liquide ;
c) la détection des particules alpha qui sont arrêtées dans le substrat du détecteur après leur passage au travers du premier contact électrique dudit détecteur ;
le procédé comprenant en outre, avant l'étape c), les étapes successives suivantes :
- une étape de préparation d'un électrolyte (8) comprenant des ions d'au moins un actinide et/ou des ions de polonium sous forme de complexes solubles obtenus à partir desdits ions d'au moins un actinide et/ou desdits ions de polonium présents dans le milieu liquide par ajout d'un sel complexant et éventuellement d'un élément choisi parmi un acide ou une base dans le milieu liquide et par application, après l'étape b), d'un courant électrique entre la contre-électrode du système de détection et le premier contact électrique du détecteur du système de détection ;
- une étape d'électroprécipitation desdits ions des actinides et/ou du polonium sous la forme d'hydroxydes insolubles d'actinides et/ou de polonium sur le premier contact du détecteur du système de détection par maintien dudit courant électrique entre la contre-électrode du système de détection et le premier contact électrique du détecteur du système de détection, les particules alpha détectées à l'étape c) provenant au moins en partie des hydroxydes insolubles d'actinides et/ou de polonium présents sur le premier contact électrique.

On précise que le diamant est dopé au bore avec un taux de dopage compris entre 10²⁰ et 2.10²¹ atomes de bore par cm³.

De préférence, le diamant est polycristallin, mais il peut également être monocristallin.

De préférence, le substrat est en silicium, monocristallin ou polycristallin, ou en diamant polycristallin. Le substrat peut également être en diamant monocristallin si l'on veut utiliser le détecteur en vue de réaliser une spectrométrie des émetteurs alpha.

Avantageusement, le détecteur du système de détection selon l'invention comprend en outre une couche en matériau électriquement isolant qui recouvre la surface de l'ensemble, à l'exception d'au moins une partie de la surface du premier contact électrique. Cette couche en matériau électriquement isolant est de préférence en un matériau résistant aux attaques chimiques. Le détecteur ainsi protégé peut alors être immergé, au moins en partie, dans le milieu liquide sans être endommagé. Il peut s'agir d'un matériau classique de passivation, comme une résine d'enrobage, par exemple un résine de type epoxy. On précise que, au vu des faibles niveaux de radioactivité censés être mesurés par le détecteur du système de détection selon l'invention, la résistance aux rayonnements alpha de ce matériau électriquement isolant servant à l'enrobage du système de détection n'est pas un paramètre critique.

Il est bien entendu que le sens de circulation des ions de la contre-électrode vers le premier contact ou vice versa dépend du sens d'application du courant électrique. Le premier contact joue alors le rôle d'électrode de travail et la contre-électrode celui d'électrode auxiliaire ou d'électrode secondaire.

La contre-électrode peut être en tout matériau électrochimiquement inattaquable dans le milieu chimique imposé par la composition de l'électrolyte support, comme par exemple en or, en tantale... La contre-électrode peut par exemple être, elle aussi, en diamant dopé au bore. Toutefois, la contre-électrode est de préférence une électrode en platine.

On précise que la manière dont on procède pour détecter les actinides est connue de l'homme du métier. Elle peut consister en une mesure nucléaire ; dans ce cas, la détection des particules alpha issues des atomes d'actinides se fait en collectant - en appliquant préalablement un champ électrique entre le premier et le deuxième contact - les charges électriques produites par la création de paires électrons-trous dans le substrat suite à l'interaction des particules alpha avec le substrat en matériau semiconducteur intrinsèque du détecteur. La détection des atomes d'actinides peut aussi consister en une mesure de spectrométrie de fluorescence X (ou XRF en anglais) ; dans ce cas, la détection consiste à exciter les atomes d'actinides par des rayons X et à mesurer le rayonnement de fluorescence X ainsi produit à l'aide d'un détecteur spécifique extérieur au système de détection selon l'invention.

L'application d'un courant électrique entre la contre-électrode et le détecteur a pour effet de produire, à l'interface entre le premier contact du détecteur du système de détection et l'électrolyte, un accroissement local du pH suite à l'électroréduction du milieu liquide (qui est, de préférence, un milieu aqueux).

On précise que l'ajout d'un sel complexant (également appelé sel de fond complexant) et éventuellement l'ajout d'un élément choisi parmi un acide ou une base au cours de l'étape de préparation de l'électrolyte a lieu avant l'étape c), mais elle peut avoir lieu avant l'étape b) ou après l'étape b).

La formation d'un électrolyte permettant de complexer les ions des actinides et/ou les ions du polonium est obtenue grâce à l'ajout d'un agent complexant dans le milieu liquide et, si nécessaire, l'ajustement de la valeur du pH par l'ajout éventuel d'un acide ou d'une base au milieu liquide. L'agent complexant est ici préférentiellement l'ion sulfate apporté par le sulfate de sodium Na₂SO₄. Le sulfate de sodium joue donc deux rôles différents, à savoir celui d'agent complexant et celui de sel de fond permettant la conduction des charges électriques au sein de l'électrolyte. De préférence, comme nous le verrons plus loin, le pH de l'électrolyte se situe, éventuellement après ajustement grâce à l'ajout d'une base ou d'un acide, entre 4 et 4,5.

Un des avantages de l'invention est que, pendant l'étape d'électroprécipitation, le premier contact du détecteur joue le rôle d'électrode : lorsqu'on applique un courant électrique entre le premier contact en diamant dopé au bore et la contre-électrode du système, le courant circule entre le premier contact et la contre-électrode par l'intermédiaire du sel de fond complexant présent dans l'électrolyte (par exemple, dissociation du Na₂SO₄ en Na⁺ et SO₄²⁻ dans l'eau) et agissant comme porteur de charges et conduit au dépôt des ions des actinides et/ou de polonium sous forme d'hydroxydes sur la surface du premier contact électrique du détecteur. Cette étape d'électroprécipitation nous permet ainsi de concentrer, sur le premier contact électrique du détecteur, les émetteurs de particules alpha présents dans le milieu liquide.

L'ajout d'un acide ou d'une base au milieu liquide contenant le sel complexant a pour effet de fixer le pH de l'électrolyte a une valeur optimale permettant la formation de complexes solubles des ions des actinides et/ou du polonium et ainsi d'éviter la formation de radiocolloïdes et/ou de précipités au sein de l'électrolyte avant qu'ait eu lieu l'électroprécipitation sur le premier contact du système.

La charge saline ajoutée au milieu liquide par l'incorporation d'un sel complexant permet également d'obtenir une bonne conductivité de l'électrolyte, réduisant la chute ohmique entre le premier contact électrique du détecteur et la contre-électrode (c'est-à-dire aux bornes de la cellule d'électrolyse).

Avantageusement, le procédé peut comprendre en outre, après l'étape c), une étape de décontamination du premier contact du détecteur du système de détection dans un électrolyte par application d'un courant électrique entre le premier contact et la contre-électrode, le sens du courant étant inversé par rapport au sens du courant appliqué au cours de l'étape d'électroprécipitation.

L'électrolyte utilisé pour réaliser la décontamination peut éventuellement avoir la même composition chimique que celle de l'électrolyte utilisé au cours de l'étape d'électroprécipitation, à la différence près que cet électrolyte ne comportera pas d'ions d'actinides et/ou d'ions de polonium.

Il est possible également d'effectuer, avant l'étape d'électrodécontamination, un premier nettoyage grossier du premier contact dans une solution d'acide dilué.

Cette étape d'électrodécontamination permet de débarrasser le détecteur du système de détection du dépôt d'hydroxydes d'émetteurs alpha et rend ainsi le détecteur de nouveau utilisable. Nous avons donc à notre disposition une méthode d'électrodécontamination simple et performante du détecteur du système de détection, qui ne nécessite pas l'utilisation d'un dispositif expérimental de conception différente.

On peut par exemple réaliser une électrodécontamination du détecteur dans une solution aqueuse de [Na₂SO₄] concentré à 0,3 M, en appliquant une densité de courant comprise entre + 4 et + 6 mA/cm² pendant 15 minutes (en inversant, bien sûr, le sens du courant par rapport à celui appliqué au cours de l'étape d'électroprécipitation).

De préférence, la mise en contact du premier contact du détecteur du système de détection avec le milieu liquide à l'étape b) du procédé est obtenue par immersion du détecteur dans le milieu liquide. Cette immersion peut être totale ou partielle. Il est à noter que cette mise en contact du premier contact électrique avec le milieu liquide ne se fait pas forcément par immersion du détecteur ; par exemple, il peut être obtenu en versant le milieu liquide dans un récipient dont le fond est formé par le premier contact électrique. L'immersion du détecteur est toutefois plus avantageuse car le détecteur est alors mobile et peut être plongé et placé à la profondeur voulue au sein du milieu liquide.

Avantageusement, l'électrolyte a un pH compris entre 4 et 4,5. De préférence, le pH est ajusté à une valeur située entre 4 et 4,5 et la concentration en sel complexant est ajustée à 0,3 M.

Avantageusement, le sel complexant qui est utilisé est du sulfate de sodium.

De préférence, l'électrolyte est une solution aqueuse. Selon une variante, l'électrolyte est une solution aqueuse et comporte en outre un solvant choisi parmi le diméthylsulfoxyde (DMSO) et le diméthylformamide (DMF) dans des proportions variables.

On précise que, lorsque le milieu liquide comporte des surfactants, il est préférable de les détruire avant de procéder à l'électroprécipitation des hydroxydes d'actinides ou de polonium. En effet, de part leur fort pouvoir complexant, la présence de surfactants dans certains milieux liquides, comme par exemple les eaux de lavage des sols, peut gêner l'électroprécipitation des ions d'actinides ou de polonium. On peut obtenir leur destruction en procédant à leur oxydation préalablement à l'étape a) ou au cours de l'étape a), par l'ajout d'oxydants dans le milieu liquide. A titre d'exemple, une méthode élégante de destruction oxydante d'un surfactant comme le Sodium Dodécylbenzène Sulfonate (SDS) peut être aisément obtenue grâce aux radicaux libres anodiquement électrogénérés sur une électrode en diamant faiblement dopée au bore (10¹⁹ atomes bore/cm³) de grande surface (plusieurs cm²), soit en mode potentiostatique (E > + 2,5 V/Ag-AgCl), soit en mode galvanostatique (J > + 4 mA/cm²).

Avantageusement, ledit au moins un actinide est choisi parmi les isotopes de l'américium, du curium, du neptunium, du plutonium et de l'uranium. En ce qui concerne les isotopes de l'uranium, l'invention peut en effet être utilisée pour la détection des isotopes de l'uranium (17 isotopes dont ²³⁸U ; ²³⁵U et ²³⁴U), qui sont majoritairement des émetteurs alpha à plus longue période radioactive que l'américium, le curium, le neptunium ou le plutonium et dont l'activité massique reste très faible. Dans ce cas, il est préférable de réaliser, après électroprécipitation de l'uranium sur le premier contact électrique du détecteur, une mesure de spectrométrie de fluorescence X plutôt qu'une mesure nucléaire.

Le milieu liquide comportant les émetteurs alpha peut être un effluent, par exemple des eaux de lavage des sols ou un distillat/condensat issu d'un effluent radioactif.

### BRÈVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :
- la figure 1 représente, selon une vue en coupe, le capteur du système de détection utilisé dans le procédé selon l'invention ;
- la figure 2 représente, selon une vue en coupe, le capteur du système de détection utilisé dans le procédé selon l'invention lorsque celui-ci comporte une couche de protection en matériau électriquement isolant ;
- la figure 3 représente, de manière schématique, le montage utilisé pour réaliser l'électroprécipitation des hydroxydes d'actinides et/ou de polonium contenus dans un milieu liquide, à l'aide d'un système de détection selon l'invention comportant une électrode ;
- la figure 4 représente les spectres enregistrés avec un exemple de système de détection utilisé dans le procédé selon l'invention (appelé système SM # 1) après électroprécipitation de différentes activités de l'américium 241 ;
- la figure 5 représente les variations du taux de comptage (s⁻¹) enregistré avec le système SM # 1 en fonction de l'activité d'américium 241 présente initialement dans l'électrolyte ;
- la figure 6 représente les spectres enregistrés avec un autre exemple de système de détection utilisé dans le procédé selon l'invention (appelé système SM # 2) après électroprécipitation de différentes activités de l'américium 241 ;
- la figure 7 représente les variations du taux de comptage (s⁻¹) enregistré avec le système SM # 2 en fonction de l'activité d'américium 241 présente initialement dans l'électrolyte ;
- la figure 8 représente les spectres enregistrés avec le système SM # 1 après électroprécipitation d'américium 241, puis après électrodécontamination.

### EXPOSÉ DÉTAILLÉ DE MODES DE RÉALISATION PARTICULIERS

Le procédé de détection selon l'invention est utilisé pour détecter des émetteurs alpha contenus dans un milieu liquide, par exemple dans une solution aqueuse.

Le procédé selon l'invention pourrait être utilisé en mode détecteur immergé classique, c'est-à-dire sans avoir à procéder à une étape d'électroprécipitation des actinides et/ou du polonium préalable, lorsque l'activité volumique du milieu liquide à mesurer est suffisante.

Au contraire, lorsque la concentration en émetteurs alpha est faible dans le milieu liquide (c'est-à-dire inférieure à environ 0,4 kBq/cm³), il est préférable d'utiliser le système de détection comportant une contre-électrode, afin de pouvoir concentrer les ions actinides et/ou polonium sur le premier contact du détecteur, avant de réaliser la mesure nucléaire. En effet, la présence de la contre-électrode dans le système de détection permet de concentrer les actinides et/ou le polonium à la surface du premier contact du détecteur par un procédé électrochimique, ce qui, au final, nous permet d'abaisser la limite de détection. Pour cela, on complexe par les ions sulfate à une valeur de pH contrôlée les ions des actinides et/ou les ions de polonium compris dans le milieu liquide et on procède à l'électroprécipitation des hydroxydes des ions des actinides et/ou des ions du polonium sur le premier contact du détecteur par électrochimie.

Sachant qu'il existe une impossibilité « électrochimique » de réaliser un dépôt métallique d'actinides sur la surface d'une électrode de travail à partir d'une solution aqueuse, il semblait difficile de pouvoir arriver à concentrer des ions actinides sur le contact électrique du détecteur. En effet, si nous observons la valeur des potentiels standards E₀ des différents couples M³⁺/M⁰ (M étant un actinide), on constate qu'ils possèdent tous une valeur de potentiel standard très négative (E₀ < - 2 V/ENH, l'ENH étant l'Electrode Normale à Hydrogène qui, par convention, est la référence « zéro volt » de l'échelle potentiel) (document **[7]**). Il n'est donc pas possible de déposer des ions actinides sur le contact électrique sous la forme métallique.

Par ailleurs, lorsque la solution aqueuse est acide, comme c'est généralement le cas des solutions aqueuses comprenant des ions actinides, le domaine de potentiel accessible est limité par le système H₂/H⁺ en réduction, avec E = 0 V/ENH, et par le système H₂O/O₂ en oxydation, avec E = + 1,23 V/ENH, ce qui revient à un domaine de potentiel accessible allant de 0 à +1,23 V.

En dehors de ce domaine de potentiel, aucune réaction électrochimique n'est possible, hormis la décomposition électrochimique du solvant (réduction de l'eau, d'une part, et oxydation de l'eau, d'autre part).

Dans ce cas précis, la totalité du courant passant dans la cellule électrochimique est monopolisée par ces réactions parasites induisant ce que les électrochimistes appellent le phénomène de « mur du solvant ».

Les ions des actinides et du polonium sont très sensibles au phénomène d'hydrolyse, phénomène qui est un cas particulier des réactions de complexation. Or, lorsque le pH d'une solution aqueuse contenant des ions des actinides ou de polonium s'accroît, la structure des ions se trouve modifiée. Dans le cas des ions des actinides, par exemple, un ou des protons sont expulsés des molécules d'eau d'hydratation vers l'eau non liée et l'ion actinide possède à ce moment des ions hydroxyle (OH⁻) en sphère interne et forme des complexes hydroxo, mono- ou polynucléaires évoluant vers la formation d'hydroxyde solide de la forme M(OH)₃, M étant un actinide.

On s'affranchit facilement de l'hydrolyse des ions des actinides ou même de celle du polonium en conservant ceux-ci dans des solutions acides de concentration supérieure à 1 M (2 M dans le cas du polonium) ou/et en ajoutant des ions complexant (SO₄²⁻) qui vont retarder l'hydrolyse. Il est aisé de modifier localement le pH à la surface de l'électrode de travail (cathode) en mettant à profit la réduction de l'eau, réaction qui a pour conséquence de former, sous courant et même en milieu acide, une couche basique (pH 12-13) selon la réaction suivante :

H₂O + H⁺ + 2e- → OH⁻ + H₂ (1)

L'électroprécipitation d'hydroxyde d'actinides M(OH)₃ insoluble peut donc s'effectuer même en solution légèrement acide (c'est-à-dire ayant un pH compris entre 3 et 5) de part la formation de cette couche basique au voisinage de l'électrode de travail selon la réaction suivante :

M³⁺ + 3 OH⁻ → M(OH)₃ (2)

Lorsque le courant de réduction de l'eau est coupé, la couche basique disparaît et l'hydroxyde d'actinides peut se dissoudre plus ou moins rapidement dans l'électrolyte de pH acide.

Il est à noter que nous ne parlons pas ici d'« électrodéposition », qui est un terme réservé à la réduction électrochimique d'un ion à l'état métallique, mécanisme réactionnel faisant intervenir un transfert d'électrons et qui conduit au dépôt d'un métal sur une cathode, mais d'« électroprécipitation », dont le produit ne résulte pas d'un transfert d'électron entre l'électrode et un cation métallique et qui aboutit à un dépôt d'un hydroxyde métallique sur une cathode par réduction électrochimique de l'eau en présence d'un ion métallique hydrolysable tel qu'un actinide ou le polonium.

Le procédé selon l'invention offre une alternative intéressante par rapport à ce qui existe actuellement en matière de mesure de la radioactivité alpha d'une solution aqueuse, notamment des eaux de rejets ou encore des condensats d'évaporation d'effluents radioactifs. Cette alternative permet un gain de temps substantiel lors de la démarche de détection en couplant, dans un même dispositif, un détecteur immergé de radioactivité alpha à une cathode d'électroprécipitation des ions des actinides ou du polonium.

Selon l'invention, le premier contact en diamant synthétique dopé au bore est électriquement conducteur et assure trois fonctions distinctes :
- il sert de cathode lors de l'électroprécipitation des ions des actinides et/ou du polonium sous forme d'hydroxydes sur le premier contact ;
- il sert aussi de contact électrique lors de la mesure nucléaire après ou en l'absence d'électroprécipitation des ions d'actinides et/ou de polonium sous forme d'hydroxydes sur le premier contact ;
- il sert enfin de revêtement protecteur contre les agressions chimiques potentielles auxquelles le capteur pourrait être soumis lors de son immersion dans la solution aqueuse à mesurer.

L'un des avantages de l'invention est que, du fait de l'étape de préconcentration qui permet l'accumulation de matière radioactive à la surface du détecteur, on abaisse la limite de détection, comparativement à mesures obtenues à l'aide d'un détecteur immergé classique.

De plus, le système de détection utilisé dans le procédé selon l'invention a un très faible bruit de fond, ce qui fait que la limite de détection du système ne dépend plus que de la durée de comptage.

Nous allons à présent décrire en détails le système de détection utilisé dans le procédé selon l'invention.

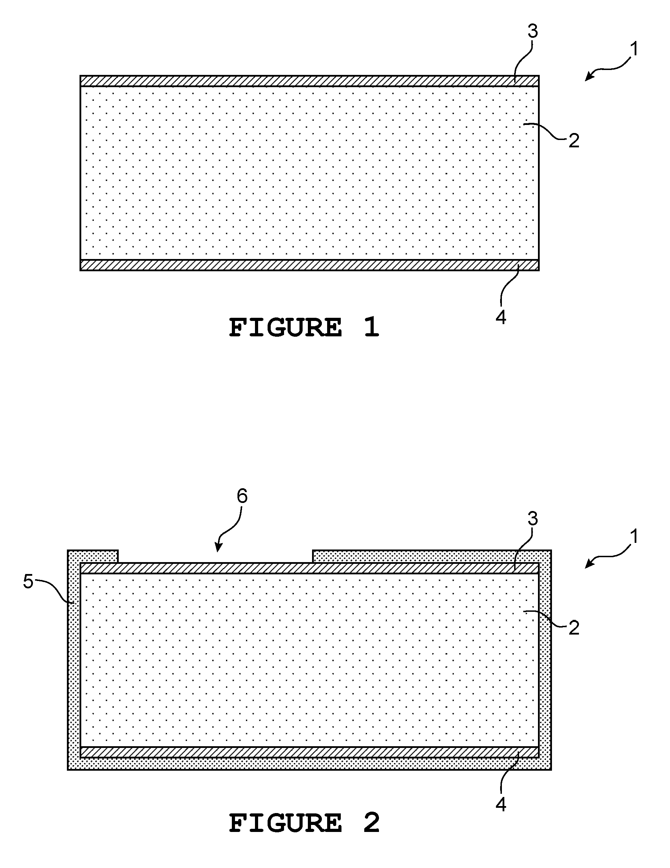

Le détecteur du système de détection selon l'invention est un détecteur de particules alpha immergeable classique, à ceci près que le premier contact électrique est en diamant dopé au bore (figure 1) . Il est à noter que le détecteur peut comprendre un support, par exemple un support en verre, qui aurait pour fonction de rigidifier le substrat en matériau semiconducteur intrinsèque. Dans ce cas, il faut disposer le substrat sur le support de sorte que la face comportant la couche en diamant dopé au bore et formant le premier contact électrique du détecteur reste accessible.

Ainsi, le détecteur 1 comprend un substrat en matériau semiconducteur intrinsèque 2, par exemple un substrat en silicium très résistif (c'est-à-dire ayant une résistivité supérieure à 10⁴ Ω.cm), sous forme de plaque comprenant deux faces principales opposées.

Une des faces principales du substrat est recouverte par une couche de diamant polycristallin dopé au bore formant un premier contact électrique 3. Cette couche a par exemple une épaisseur située entre 350 et 500 nm.

L'autre face principale est par exemple recouverte d'une couche d'aluminium ayant par exemple une épaisseur de 100 nm : elle forme le deuxième contact électrique 4.

Un premier plot de connexion (non représenté) reliant la surface électriquement conductrice de la couche de diamant dopé à un conducteur électrique en cuivre (non représenté) est mis en place. Un second plot de connexion (non représenté) reliant la couche d'aluminium à un autre conducteur électrique en cuivre (non représenté) est mis en place. Ces deux conducteurs électriques en cuivre, qui sont électriquement isolés l'un de l'autre, serviront à la mesure du courant généré entre le premier et le deuxième contact électrique. Les deux plots de connexion sont par exemple réalisés à l'aide d'une goutte de laque à l'argent (polymère conducteur extrinsèque).

De préférence, l'ensemble ainsi constitué est ensuite noyé dans un matériau électriquement isolant 5, par exemple une résine époxy ou tout autre matériau polymère chimiquement inerte, afin d'être protégé de la corrosion, à l'exception de l'extrémité du premier conducteur en cuivre relié au premier contact 3, de l'extrémité du second conducteur en cuivre relié au deuxième contact 4 et d'au moins une partie de la surface du premier contact (figure 2). La partie de la surface du premier contact qui reste non couverte par le matériau isolant forme ce que l'on appelle une fenêtre de détection 6 et elle permet l'accès des émetteurs alpha au substrat semiconducteur intrinsèque sous-jacent.

Pour récapituler, afin de réaliser un tel détecteur, on peut par exemple utiliser un substrat de silicium <111> de haute résistivité (> 10⁴ Ω.cm) dont les deux faces principales sont polies et ayant une épaisseur moyenne de 200 µm. Ce type de matériau est notamment commercialisé par la société Siltronix^{®}. C'est ce substrat de silicium qui va servir de détecteur des particules α.

On procède ensuite à la mise en place du premier et du second contacts électriques sur chacune des deux faces principales du substrat de silicium afin de pouvoir collecter les charges électriques lors de la détection des particules alpha.

Comme signalé ci-dessus, le premier contact, situé sur la face avant du substrat, est constitué d'une couche de diamant polycristallin dopé au bore. Cette couche est réalisée par dépôt chimique en phase vapeur (CVD en anglais) assisté par plasma micro-onde. Il s'agit d'un procédé de dépôt à basse pression et à haute température qui consiste à ioniser, par micro-ondes dans une enceinte sous vide, un mélange gazeux contenant une faible proportion de méthane et de triméthylbore (TMB) et une plus grande quantité de dihydrogène. A titre d'exemple, on peut utiliser les proportions suivantes : [CH₄/H₂] = 0,22 % avec du TMB dilué dans du H₂ à 2000 ppm. Le méthane (CH₄) est une source de carbone facile à ioniser, tandis que le TMB est la source d'agent dopant (bore). Le dihydrogène, quant à lui, a un rôle essentiel car il va favoriser la croissance de la phase diamant par rapport à la phase graphite, qui croîtrait de manière préférentielle en son absence.

Afin d'initier la croissance du matériau diamant dopé au bore sur une face du substrat de silicium, il est indispensable de procéder au préalable à un traitement de surface de cette face (correspondant à un traitement de « nano seeding » en anglais). Ce traitement consiste à effectuer un dépôt homogène de nanopoudre de diamant sur la face du substrat, par exemple par dépôt à la tournette (« spin-coating » en anglais) à partir d'une suspension de nanopoudre de diamant dans un solvant, par exemple de l'eau. Les particules de la nanopoudre de diamant ont un diamètre situé entre 2 et 20 nm ; de préférence, le diamètre des particules de la nanopoudre est de 5 nm. La vitesse élevée de rotation du substrat (entre 2000 et 3000 rotations par minute pendant une durée de 20 secondes) permet de déposer la nano-poudre de manière uniforme et permet également d'évaporer le solvant de la suspension. Le substrat de silicium ainsi préparé peut ensuite être utilisé pour réaliser la croissance de la couche de diamant dopé au bore.

Les conditions de croissance de la couche de diamant dopé au bore sur une des faces du substrat de silicium sont les suivantes :
- la puissance micro-onde du plasma est de 1, 8 kW ;
- la pression et la température au sein de l'enceinte de croissance sont respectivement de 50 mbars et de 750°C ;
- le mélange gazeux est constitué de 88 sccm de H₂, 0,22 sccm de CH₄ et 12 sccm de TMB (2000 ppm) ;
- la durée de la croissance est de 45 h ;
- la durée du refroidissement sous H₂ consécutif à la croissance est de 30 min.

On rappelle que 1 sccm (pour « standard cubic centimeters per minute » en anglais) correspond à un débit volumique de 1 centimètre cube par minute dans des conditions de température à 0°C et de pression à 101,325 kPa.

Le second contact, situé sur la face arrière du substrat, peut être, comme nous l'avons signalé plus haut, formé d'une couche d'aluminium métal. Cette couche est déposée par dépôt physique en phase vapeur (PVD en anglais), de la manière décrite ci-dessous après avoir effectué le dépôt de la couche de diamant.

Dans un premier temps, la face arrière du substrat de silicium (comportant sur sa face avant une couche de diamant dopé) est soumise à une gravure à l'aide d'un plasma oxygène/argon, afin de retirer toutes traces résiduelles de diamant dopé au bore.

Les conditions de gravure pour le nettoyage du substrat de silicium par un plasma oxygène/argon sont les suivantes :
- le mélange gazeux est constitué de 140 sccm d'O₂ et de 42 sccm d'Ar ;
- la pression à l'intérieur de l'enceinte de gravure est de 60 mbars ;
- la durée de la gravure est de 2 à 3 h ;
- la puissance RF est de 150 W.

Après l'opération de gravure sous plasma, le substrat de silicium recouvert d'une couche de diamant dopé au bore est nettoyé dans un bain d'acide chaud oxydant (H₂SO₄ + KNO₃) destiné à retirer toute trace organique pouvant provenir du support d'échantillon dans le réacteur.

Après rinçage à l'eau ultra-pure et séchage, on effectue, sur la face arrière du substrat, un dépôt d'aluminium métal par dépôt physique en phase vapeur RF magnétron (PVD) dans un plasma d'argon. Durant cette étape, un masque en acier inoxydable est utilisé de manière à éviter le dépôt d'aluminium sur les bords du substrat. Les conditions de ce dépôt sont les suivantes :
- le mélange gazeux est constitué de 42 sccm d'argon ;
- la pression dans l'enceinte est de 6,2 mbars ;
- la puissance RF est de 150 W ;
- la durée du dépôt est de 3 minutes.

On réalise ensuite les deux plots de connexion en laque d'argent reliant, pour l'un, le contact en diamant dopé au bore (face avant) et, pour l'autre, le contact en aluminium (face arrière) à des connecteurs de cuivre électriquement isolés l'un de l'autre.

Enfin, l'ensemble ainsi obtenu est enrobé dans un matériau électriquement isolant et étanche. Lors de l'opération d'enrobage, une petite fenêtre de surface comprise, par exemple, entre 0,2 et 1 cm² est laissée à nue au niveau de la couche en diamant dopé au bore, afin d'assurer le fonctionnement du détecteur soit en mode « cathode » au cours de l'étape d'électroprécipitation, soit en mode « anode » au cours de l'étape d'électrodécontamination du détecteur, comme nous le verrons plus loin dans le texte, soit encore en mode « détecteur de rayonnement α », au cours de l'étape de détection.

Le matériau d'enrobage peut par exemple être une résine époxy bi-composants de type Araldite^{®} à prise rapide (de chez Bostik).

Mis à part le détecteur décrit ci-dessus, le système de détection comporte en outre une contre-électrode, qui va nous permettre de réaliser l'électroprécipitation des ions des actinides et/ou du polonium, ainsi que l'électrodécontamination du système.

Le système ainsi réalisé fonctionne selon deux étapes distinctes.

La première étape est une étape d'électroprécipitation des ions actinides et/ou des ions du polonium. Pour cela, le milieu liquide à analyser (qui est de préférence un milieu aqueux) et qui est censé contenir des actinides et/ou du polonium, est ajusté chimiquement, tant au niveau du pH que de sa concentration en sel de fond complexant (par exemple le sel Na₂SO₄).

L'électroprécipitation des ions des actinides et/ou du polonium sur la surface du premier contact électrique en diamant dopé au bore (cathode) est réalisée en reliant, d'une part, le pole négatif d'un générateur de courant continu (non représenté) à l'extrémité du conducteur de cuivre relié au premier contact électrique du détecteur du système de détection et, d'autre part, le pole positif de ce même générateur à une contre-électrode statique en platine agissant comme anode, le premier contact électrique du détecteur (et éventuellement l'ensemble du détecteur) et l'anode étant placés dans le milieu liquide contenant les actinides et/ou le polonium.

L'anode statique peut être constituée par un fil de platine, ayant un diamètre compris entre 1 et 2 mm, et dont l'extrémité supérieure est équipée d'une fiche banane femelle pour faciliter sa connexion.

Le mode de fonctionnement choisi pour l'électroprécipitation est le mode galvanostatique sous faible densité de courant cathodique (-1,5 < J < - 6 mA/cm²) et sous forte agitation (10³ rpm) pendant une durée de 120 minutes.

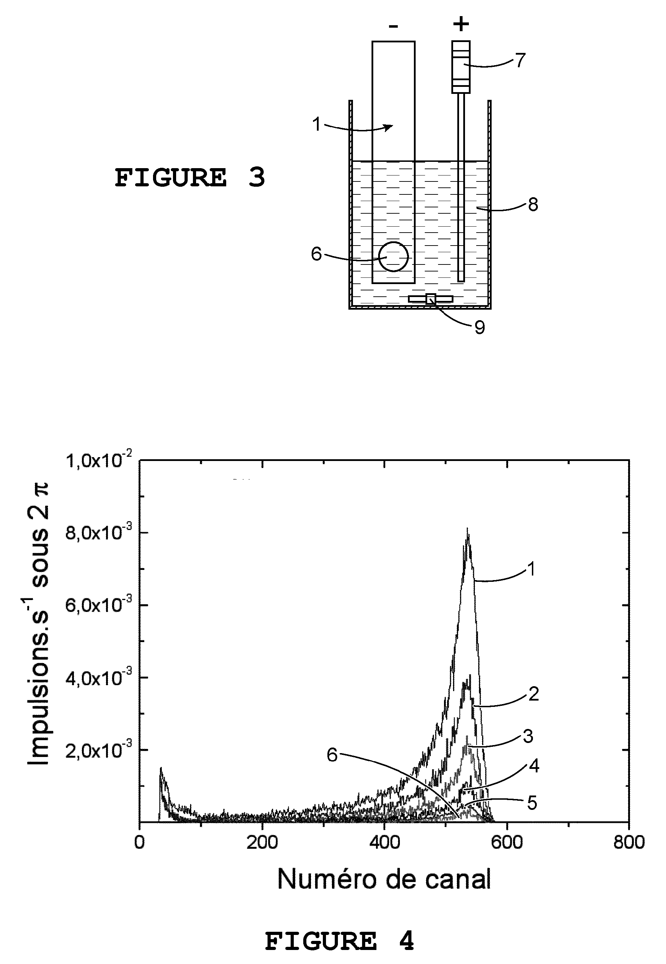

A titre d'information, un schéma du montage utilisé pour réaliser l'électroprécipitation est illustré dans la figure 3. On y retrouve le détecteur 1, muni d'une fenêtre de détection 6, et dont le premier contact électrique 3 joue le rôle de cathode, et la contre-électrode 7, qui joue le rôle d'anode, qui sont plongés dans un électrolyte 8 maintenu sous agitation à l'aide d'un barreau magnétique 9 recouvert de téflon.

La seconde étape est l'étape de mesure des ions des actinides et/ou des ions du polonium électroprécipités présents sur la surface de la cathode en diamant dopé au bore (c'est-à-dire sur la fenêtre de détection 6 du détecteur 1).

Une chaîne classique de spectrométrie α peut être reliée au détecteur.

Les particules α issues du dépôt d'actinides et/ou du dépôt du polonium électroprécipités à la surface de la couche de diamant dopé au bore (premier contact), vont produire dans le substrat en silicium des paires électrons-trous mobiles induisant un courant impulsionnel. Le nombre de coups enregistrés par le détecteur étant proportionnel à la quantité d'émetteurs α présents sur la surface du premier contact électrique (couche en diamant dopé au bore), il est aisé de remonter à la concentration en actinides et/ou en polonium de la solution à analyser grâce à un étalonnage préalable du détecteur dans les conditions de mesure.

### • Exemples d'application du système de détection selon l'invention pour la mesure de l'activité α d'un effluent contenant de l'américium 241 :

Lors des opérations d'électroprécipitation de l'américium 241, on utilise, mis à part le système de détection selon l'invention :
- un bécher en verre ayant un volume nominal de 50 mL et qui est recouvert de Téflon® ou de PEEK (*PolyEtherEtherKetone*),
- un agitateur magnétique capable de produire 1000 rotations par minute et un barreau aimanté recouvert de Téflon®, ayant un diamètre de 6 mm et une longueur de 25 mm ;
- une alimentation électrique régulée pouvant fournir jusqu'à une tension continue de 12 V et un ampérage de 10 mA ;
- une électrode de pH et un pHmètre ;
- des produits chimiques, à savoir du Na₂SO₄, H₂SO₄, NaOH, NH₃, une solution mère d'²⁴¹Am (~ 770 kBq/g), une solution de [HNO₃] = 1 M, de l'eau désionisée (ayant une résistivité de 18 MΩ.cm) et des solutions tampons ayant un pH de 4, 7 et 9.

En ce qui concerne les opérations de mesure nucléaire de l'américium, mis à part le système de détection selon l'invention, on utilise :
- un dispositif d'occultation de la lumière, comme par exemple une boite noire, pour effectuer les mesures nucléaires dans l'obscurité ;
- un préamplificateur de signal, par exemple un Amptek A250 ;
- un amplificateur de signal, par exemple un Ortec 672 ;
- module codeur/analyseur de spectre, par exemple un Amptek MCA-8000 A ;
- un dispositif de visualisation des données spectrométriques, par exemple un ordinateur et un logiciel de spectrométrie.

Le mode opératoire est le suivant.

On introduit dans le bécher de volume nominal 50 mL, un volume de 40 mL de la solution à analyser qui contient des traces d'actinides.

On y ajoute une quantité suffisante de sel de fond solide, par exemple du sulfate de sodium (Na₂SO₄) solide, de façon à ajuster la concentration de sel de fond de l'électrolyte à 0,3 M.

La solution est agitée mécaniquement jusqu'à solubilisation complète du sel ajouté.

Puis, on ajuste le pH de la solution entre 4,0 et 4,5, soit en ajoutant quelques gouttes de [H₂SO₄] = 0,05 M, soit en ajoutant quelques gouttes de [NaOH] - 0,1 M, selon le pH de départ de la solution à analyser.

On immerge le détecteur (et en particulier le premier contact électrique servant de cathode) et la contre-électrode servant d'anode dans l'électrolyte et on les relie à l'alimentation en courant continu.

On met la solution en agitation à l'aide du barreau aimanté jusqu'à la vitesse optimale (1000 rotations par minute) et on procède à l'électrolyse en imposant une densité de courant à la cathode dans une gamme de densité de courant située entre - 1 à - 6 mA/cm² pendant 120 minutes.

Deux minutes avant la fin de l'électrolyse, on injecte dans l'électrolyte 3 mL d'une solution de NH₃ (2 % dans l'eau) afin d'accroître le pH de l'électrolyte vers une valeur cible de 9 (ce qui a pour effet d'éviter la redissolution de l'hydroxyde d'américium lors de la coupure du courant par disparition de la couche basique produite par réduction électrochimique de l'eau au voisinage de la cathode), puis on coupe le courant d'électrolyse.

On retire le détecteur de l'électrolyte, on l'égoutte, puis on le fait sécher à l'air libre sans le rincer, avant de le placer dans un sachet plastique (protection contre la contamination radioactive).

Puis, on introduit le détecteur ainsi protégé dans une boite noire de mesure et on procède à la mesure d'activité α en reliant le détecteur à l'électronique de comptage contenue dans cette boîte noire. La mesure nucléaire doit s'effectuer dans l'obscurité à cause de la présence dans le détecteur du substrat en silicium, qui est photosensible. Il est à noter qu'il est possible de s'affranchir de la nécessité d'effectuer la mesure nucléaire dans l'obscurité à condition de déposer préalablement une couche opaque entre le diamant dopé au bore et le détecteur en silicium. Ceci pourrait être avantageusement réalisé par dépôt d'une couche de 20 nm de DLC (en anglais « Diamond Like Carbon ») ou d'une couche de 30 nm d'un métal choisi parmi le tungstène, le titane ou le molybdène.

Après la mesure nucléaire, la fenêtre de détection du détecteur (cathode) peut être aisément décontaminée par un premier rinçage grossier avec une solution [H₂SO₄] = 0,1 M, suivi d'une électrolyse dans une solution de [Na₂SO₄] = 0,3 M en inversant les polarités du courant par rapport à l'opération d'électroprécipitation (le pole (-) est relié à la contre-électrode de platine et le pole (+) est relié au détecteur) sous une densité de courant anodique située dans la gamme de (5 ± 1) mA/cm²) pendant 15 minutes.

Un comptage du bruit de fond pendant une durée de quelques heures permet enfin de s'assurer de la qualité de la décontamination.

Il est à noter qu'en présence d'agents organiques fortement complexant (surfactants...) dans le milieu liquide à analyser, on peut prévoir une baisse significative de l'efficacité de l'opération d'électroprécipitation des ions actinides et/ou des ions du polonium comme déjà expliqué plus haut. En effet, les ions actinides et/ou du polonium, qui sont alors fortement complexés, ne pourront plus s'hydrolyser efficacement au voisinage de la cathode, ni précipiter sur celle-ci du fait de la compétition entre les réactions de complexation par les surfactants et les réactions d'hydrolyse.

Cette difficulté peut être contournée si une étape de destruction oxydante du complexant est mise en place préalablement à l'électroprécipitation. Cette destruction oxydante peut par exemple être réalisée sous forte agitation mécanique (> 10³ rpm) directement dans le milieu à analyser par production, en mode galvano-statique, de radicaux libres au niveau d'une anode constituée, non pas de platine, mais de diamant faiblement dopé au bore (~ 10¹⁹ B/cm³) ayant une surface de plusieurs cm².

### Exemple 1 : mesure d'une gamme d'activité d,²⁴¹Am avec le système SM # 1

Le système SM # 1 est un système de détection comportant un détecteur et une électrode tels que décrit ci-dessus et dans lequel le premier contact du détecteur a une fenêtre de détection ayant une surface de 0,17 ± 0,01 cm².

Dans un bécher de volume utile de 50 mL, on introduit 40 mL d'une solution de [Na₂SO₄] = 0,3 M préalablement ajustée à un pH de 4,5 en utilisant du H₂SO₄ dilué.

Cette solution a été marquée par des quantités croissantes d'²⁴¹Am dans une gamme d'activité s'étendant de 0,6 à 30 Bq et a subi une agitation constante de 1000 rotations.min⁻¹.

Entre chaque ajout d'américium, on effectue un comptage alpha en utilisant le système SM # 1, puis on le décontamine, avant qu'un bruit de fond ne soit systématiquement mesuré avant tout nouveau dépôt de matière radioactive.

Les électroprécipitations successives d'américium ont été réalisées pendant une durée de 2 heures sous une densité de courant cathodique J_{c} égale à - 6 mA/cm².

Les décontaminations du système ont été réalisées par un premier lavage grossier avec une solution de [H₂SO₄] = 0, 1 M, suivi d'une électrolyse en mode galvanostatique anodique (la densité de courant anodique Jₐ étant de + 6 mA/cm²) dans une solution de [Na₂SO₄] = 0,3 M non ajustée en pH (pH ~ 6,5) pendant une durée de 15 minutes.

Les résultats obtenus avec le système SM # 1 après électroprécipitation de différentes activités d'²⁴¹Am sont présentées sous forme de spectres dans la figure 4.

Pour chacun des spectres enregistrés avec le système SM # 1, les paramètres de volume d'électrolyte (40 mL), de pH (4,5), de courant cathodique (- 6 mA/cm²), d'agitation (1000 rotations par minute) et de durée (2 heures) restent inchangés ; seule l'activité ²⁴¹Am dans l'électrolyte est modifiée.

On a ainsi, dans la figure 4, six spectres correspondants à des valeurs suivantes d'activité ²⁴¹Am dans l'électrolyte :
- 28,30 ± 0,60 Bq (spectre 1),
- 14,75 ± 0,60 Bq (spectre 2),
- 5,74 ± 0,17 Bq (spectre 3),
- 2,87 ± 0,11 Bq (spectre 4),
- 1,18 ± 0,05 Bq (spectre 5),
- 0,59 ± 0,03 Bq (spectre 6).

En consultant ces spectres, on constate un accroissement de la hauteur du pic caractéristique de l'américium-241 proportionnel à l'activité d'américium présente initialement dans l'électrolyte.

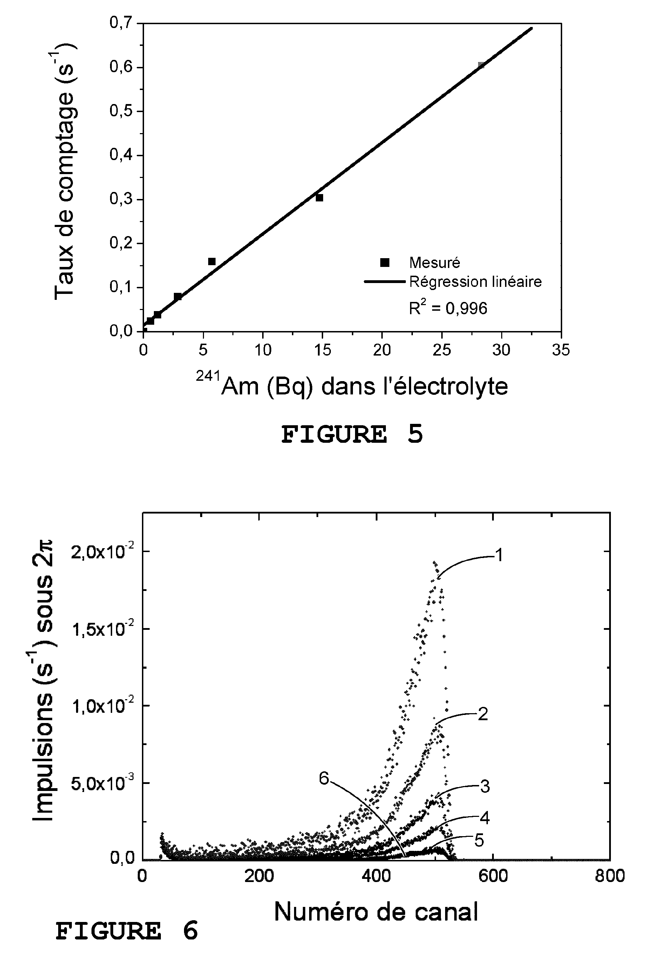

Dans la figure 5 est représentée la variation du taux de comptage (s⁻¹) enregistré avec le système SM # 1 (correspondant à la valeur de l'intégrale du pic caractéristique de l'américium-241, diminuée du bruit de fond et divisée par la durée de comptage exprimée en secondes) en fonction de la quantité d'américium présente initialement dans l'électrolyte (Bq).

On constate qu'il y a une relation linéaire entre ces deux grandeurs. Cette relation a été démontrée à partir d'une régression linéaire construite à partir des points expérimentaux, pour laquelle on obtient un coefficient R² proche de 1 (R² = 0, 996) . Par conséquent, la relation ainsi définie peut parfaitement servir de courbe d'étalonnage en vue de l'analyse quantitative d'un échantillon d'américium-241 d'activité inconnue comprise entre 0,6 et 30 Bq dans un électrolyte de même composition.

### Exemple 2 : mesure d'une gamme d'activité d,²⁴¹Am avec le système SM # 2

Le système SM # 2 est un système de détection comportant un détecteur et une électrode tels que décrit ci-dessus et dans lequel le premier contact du détecteur a une fenêtre de détection ayant une surface de 0,39 ± 0,01 cm².

Dans un bécher de volume utile de 50 mL, on introduit 40 mL d'une solution de [Na₂SO₄] = 0,3 M préalablement ajustée à un pH de 4 en utilisant du H₂SO₄ dilué.

Cette solution a été marquée par des quantités croissantes d'²⁴¹Am dans une gamme d'activité s'étendant de 0,6 à 30 Bq et a subi une agitation constante de 1000 rotations.min⁻¹.

Entre chaque ajout d'américium, on procède au comptage alpha, puis à la décontamination du système, avant qu'un bruit de fond ne soit systématiquement mesuré avant tout nouveau dépôt de matière radioactive.

Les électroprécipitations successives d'américium ont été réalisées pendant une durée de 2 heures sous une densité de courant cathodique J_{c} égale à - 1, 6 mA/cm².

Les décontaminations du système ont été réalisées par un premier lavage grossier avec une solution de [H₂SO₄] = 0, 1 M, suivi d'une électrolyse en mode galvanostatique anodique (Jₐ = + 5 mA/cm²) dans une solution de [Na₂SO₄] - 0,3 M non ajustée en pH (pH ~ 6,5) pendant une durée de 15 minutes.

Les résultats obtenus avec le système SM # 2 après électroprécipitation de différentes activités d'²⁴¹ Am sont présentées sous forme de spectres dans la figure 6.

Pour chacun des six spectres enregistrés avec le système SM # 2, les paramètres de volume d'électrolyte (40 mL), de pH (4), de courant cathodique (- 1,6 mA/cm²), d'agitation (1000 rotations par minute) et de durée (2 heures) restent inchangés ; seule l'activité ²⁴¹Am dans l'électrolyte est modifiée.

On utilise les mêmes valeurs d'activité ²⁴¹Am dans l'électrolyte que celles utilisées dans l'exemple 1.

En consultant ces spectres, on constate un accroissement de la hauteur du pic caractéristique de l'américium-241 proportionnel à l'activité d'américium présente initialement dans l'électrolyte.

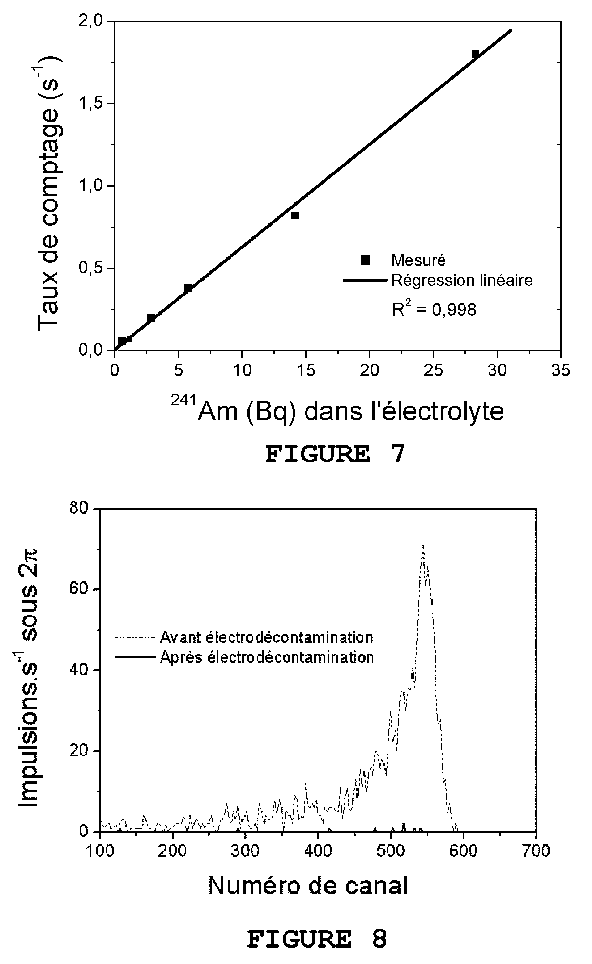

Dans la figure 7 est représentée la variation du taux de comptage (s⁻¹) enregistré avec le système SM # 2 (correspondant à la valeur de l'intégrale du pic caractéristique de l'américium-241, diminuée du bruit de fond et divisée par la durée de comptage exprimée en secondes) en fonction de la quantité d'américium présente initialement dans l'électrolyte (Bq).

On constate qu'il y a une relation linéaire entre ces deux grandeurs. Cette relation a été démontrée à partir d'une régression linéaire construite à partir des points expérimentaux et pour laquelle on obtient un coefficient R² proche de 1 (R² = 0, 998) . Par conséquent, la relation ainsi définie peut parfaitement servir de courbe d'étalonnage en vue de l'analyse quantitative d'un échantillon d'américium d'activité inconnue comprise entre 0,6 et 30 Bq dans un électrolyte de même composition.

Une synthèse des résultats obtenus avec le système SM # 1 dans l'exemple 1 et le système SM # 2 dans l'exemple 2 est consignée dans le tableau 1 ci-dessous.

**Tableau 1**

| | | | | SM # 1 | | SM # 2 | |
|---|---|---|---|---|---|---|---|
| **Solution mère (Bq/g)** | **Volume dispersé (µL)** | **Activité dispersée (Bq)** | **Incertitude sur l'activité dispersée (Bq)** | **Taux de comptage (s⁻¹)** | **Incertitude relative sur le taux de comptage (%)** | **Taux de comptage (s⁻¹)** | **Incertitude relative sur le taux de comptage (%)** |
| 546 | 50 | 28,30 | 0,60 | 0,605 | 0,5 | 1,799 | 0,6 |
| | 25 | 14,75 | 0,60 | 0,304 | 0,7 | 0,821 | 0,5 |
| 111 | 50 | 5,75 | 0,17 | 0,159 | 1,0 | 0,380 | 0,6 |
| | 25 | 2,87 | 0,11 | 0,080 | 1,4 | 0,199 | 0,6 |
| 23 | 50 | 1,18 | 0,05 | 0,038 | 1,0 | 0,073 | 1,0 |
| | 25 | 0,59 | 0,03 | 0,024 | 2,5 | 0,059 | 0,9 |

### Exemple 3 : décontamination électrochimique des systèmes

A titre d'exemple, nous avons réalisé une mesure nucléaire du système SM # 1 après électroprécipitation d'²⁴¹Am ayant une activité de 2,87 Bq dans l' électrolyte ; le taux de comptage net mesuré est de 0,08 coup par seconde.

Ce système est ensuite soumis à une décontamination électrochimique selon le mode opératoire suivant.

Dans un premier temps, le système SM # 1 est rincé avec une solution de [H₂SO₄] = 0,1 M, puis est placé dans un bécher de volume utile de 50 mL contenant 40 mL d'une solution de [Na₂SO₄] = 0,3 M non préalablement ajustée en pH (pH ~ 6,5).

Le premier contact du détecteur du système est relié au pole (+) du générateur de courant et la contre-électrode du système constituée d'un fil de platine est relié au pole (-) de ce même générateur de courant.

La décontamination électrochimique du système est réalisée en mode galvanostatique sous une densité de courant anodique de Jₐ = + 6 mA/cm² sous agitation (1000 tours par minute) pendant une durée de 15 minutes.

Après coupure du courant, le détecteur et la contre-électrode en platine sont récupérés, rincés à l'eau désionisée puis séchés à l'air.

Les spectres α enregistrés respectivement à la suite de l'électroprécipitation de l'américium sur le premier contact du détecteur du système SM # 1 pour une activité de 2,87 Bq dans l'électrolyte et après l'électrodécontamination sont représentés dans la figure 8.

Une mesure nucléaire du détecteur du système SM # 1 après décontamination électrochimique donne un taux de comptage net de 0,004 coup par seconde, ce qui correspond à un rendement de décontamination de 95 %.

D'autres résultats d'électro-décontaminations des systèmes SM # 1 et SM # 2 après électroprécipitation de différents niveaux de radioactivité d'²⁴¹ Am sont présentés dans le tableau 2 ci-dessous. On peut y voir les performances de décontamination des systèmes SM # 1 et SM # 2.

**Tableau 2**

| | SM # 1 | | | | SM # 2 | | | | |
|---|---|---|---|---|---|---|---|---|---|
| **²⁴¹Am en solution (Bq)** | 0,59 | 2,87 | 5,74 | 14,75 | 0,59 | 1,18 | 2,87 | 5,74 | 14,75 |
| **Taux de comptage avant décontamination (s⁻¹)** | 0,024 | 0,080 | 0,159 | 0,304 | 0,059 | 0,073 | 0,199 | 0,380 | 0,821 |
| **Jₐ (mA/cm²)** | 6 | | | | 5 | | | | |
| **Taux de comptage après décontamination (s⁻¹)** | 0,0047 | 0,0040 | 0,0014 | 0,0058 | 2,76 10⁻⁴ | 6,49 10⁻⁴ | 2,63 10⁻⁴ | 3,60 10⁻⁴ | 8,41 10⁻⁴ |
| **Rendement de décontamination (%)** | **80,40** | **95,00** | **99,12** | **98,10** | **99,53** | **99,11** | **99,86** | **99,90** | **99,90** |

En conclusion, nous avons démontré ci-dessus la faisabilité d'un système de détection et d'un procédé de mesure selon l'invention au travers d'exemples utilisant l'²⁴¹Am comme traceur radiochimique. Il va de soit que ce système de détection est également applicable aux autres isotopes de l'américium. De plus, de part la similitude de comportement chimique dans la famille des actinides, un tel système pourra aussi être étendu à la mesure des isotopes du plutonium, du curium et du neptunium. A cette liste, nous pouvons également ajouter le polonium-210, car il s'agit d'un émetteur alpha pur et, bien qu'il ne fasse pas partie de la famille des actinides, il s'agit d'un élément qui est facilement hydrolysable et qui peut donc être utilisé dans le procédé d'électroprécipitation selon l'invention.

### BIBLIOGRAPHIE

[1] S.F. Kozlov, E.A. Konorova, M.I. Krapivin, V.A. Nadein, "Usage of diamond detectors as immersed alpha-counters", IEEE Transactions on nuclear science, Vol NS-24, N°1 (1977), pages 242-243.
[2] I. Feist, K. Vdolecek, C. Konecny, Radiochem. Radioanal. Lett., Vol 36, (2-3) (1978), page 101.
[3] M.I. Krapivin, I.A. Lebedev, B.F. Myasoedov, V.G. Yudina, A.A. Yakobson, V.Y. Frenkel, Radiokhimia, Vol 21, N°2 (1979), page 321.
[4] A. Robert, C. Stella, R. Heindl, "Nuclear Instruments and Methods in Physics Research", Vol. A, 225 (1) (1984), page 179.
[5] P. Bergonzo, F. Foulon, A. Brambilla, D. Tromson, C. Jany, S. Haan, "Corrosion hard CVD diamond alpha particle detectors for nuclear liquid source monitoring", Diamond and Related Materials, Vol. 9 (2000), pages 1003-1007.
[6] O.B. Egorov, R.S. Addleman, M.J. O'Hara, T. Marks, J.W. Grate, "Direct measurement of alpha emitters in liquids using passivated ion implanted planar silicon (PIPS) diode detectors", Nuclear Instruments and Methods in Physics Research, A 537 (2005), pages 600-609.
[7] P. Vitorge, "Chimie des actinides", Techniques de l'ingénieur, BN 3520-2 (1999).

## Revendications

1. Procédé de détection de l'activité alpha d'un milieu liquide contenant des ions d'au moins un actinide et/ou des ions du polonium, ledit procédé comprenant les étapes successives suivantes :
a) la fourniture d'un système de détection in situ de particules alpha dans un milieu liquide, qui comprend :
- un détecteur de particules alpha (1) comportant un ensemble formé d'un substrat en un matériau semiconducteur intrinsèque (2) qui est pris en sandwich entre deux couches en matériaux électriquement conducteurs formant respectivement un premier (3) et un deuxième (4) contact électrique, le premier contact étant destiné à être en contact avec le milieu liquide et étant en diamant dopé au bore ;
- une contre-électrode (7) en matériau électriquement conducteur, destinée à être mise en contact avec le milieu liquide ; et
- des moyens pour connecter ladite contre-électrode (7) et le premier contact électrique (3) du détecteur (1) du système de détection à une source de courant électrique afin de permettre la circulation des ions, présents dans le milieu liquide, de la contre-électrode vers le premier contact électrique du détecteur ou vice versa ;
b) la mise en contact du premier contact (3) du détecteur (1) du système de détection avec le milieu liquide et la mise en contact de la contre-électrode (7) du système de détection avec le milieu liquide ;
c) la détection des particules alpha qui sont arrêtées dans le substrat (2) du détecteur après leur passage au travers du premier contact électrique dudit détecteur ;
le procédé comprenant en outre, avant l'étape c), les étapes successives suivantes :
- une étape de préparation d'un électrolyte (8) comprenant des ions d'au moins un actinide et/ou des ions de polonium sous forme de complexes solubles obtenus à partir desdits ions d'au moins un actinide et/ou desdits ions de polonium présents dans le milieu liquide par ajout d'un sel complexant et éventuellement d'un élément choisi parmi un acide ou une base dans le milieu liquide et par application, après l'étape b), d'un courant électrique entre la contre-électrode du système de détection et le premier contact électrique du détecteur du système de détection ;
- une étape d'électroprécipitation desdits ions des actinides et/ou du polonium sous la forme d'hydroxydes insolubles d'actinides et/ou de polonium sur le premier contact du détecteur du système de détection par maintien dudit courant électrique entre la contre-électrode du système de détection et le premier contact électrique du détecteur du système de détection, les particules alpha détectées à l'étape c) provenant au moins en partie des hydroxydes insolubles d'actinides et/ou de polonium présents sur le premier contact électrique.

2. Procédé de détection selon la revendication 1, comprenant en outre, après l'étape c), une étape de décontamination du premier contact (3) du détecteur du système de détection dans un électrolyte, par application d'un courant électrique entre le premier contact et la contre-électrode, le sens du courant étant inversé par rapport au sens du courant appliqué au cours de l'étape d'électroprécipitation.

3. Procédé de détection selon la revendication 1, dans lequel la mise en contact du premier contact (3) du détecteur du système de détection avec le milieu liquide à l'étape b) est obtenue par immersion du détecteur dans le milieu liquide.

4. Procédé de détection selon la revendication 1, dans lequel l'électrolyte (8) a un pH compris entre 4 et 4,5.

5. Procédé de détection selon la revendication 1, dans lequel le sel complexant est du sulfate de sodium.

6. Procédé de détection selon la revendication 1, dans lequel l'électrolyte (8) est une solution aqueuse.

7. Procédé de détection selon la revendication 6, dans lequel l'électrolyte (8) comporte en outre un solvant choisi parmi le diméthylsulfoxyde (DMSO) et le diméthylformamide (DMF).

8. Procédé de détection selon la revendication 1, dans lequel ledit au moins un actinide est choisi parmi les isotopes de l'américium, du curium, du neptunium, du plutonium et de l'uranium.

9. Procédé de détection selon la revendication 1, dans lequel le milieu liquide est un effluent, par exemple des eaux de lavage des sols ou des distillats d'évaporation d'effluents radioactifs.

## Patentansprüche

1. Verfahren zur Detektion der Alpha-Aktivität eines flüssigen Mediums, das Ionen zumindest eines Actinoids und/oder Ionen von Polonium enthält, wobei das Verfahren die nachstehenden, aufeinanderfolgenden Schritte umfasst:
a) Bereitstellen eines Systems zur Detektion in situ von Alpha-Teilchen in einem flüssigen Medium, das umfasst:
- einen Detektor für Alpha-Teilchen (1), der eine Einheit aufweist, die aus einem Substrat aus intrinsischem Halbleitermaterial (2) gebildet ist, das sandwichartig zwischen zwei Schichten aus elektrisch leitenden Materialien aufgenommen ist, die einen ersten (3) bzw. einen zweiten (4) elektrischen Kontakt bilden, wobei der erste Kontakt dazu bestimmt ist, das flüssige Medium zu kontaktieren und aus Bor-dotiertem Diamant besteht,
- eine Gegenelektrode (7) aus elektrisch leitendem Material, die dazu bestimmt ist, mit dem flüssigen Medium in Kontakt gebracht zu werden; und
- Mittel zum Verbinden der Gegenelektrode (7) und des ersten elektrischen Kontakts (3) des Detektors (1) des Detektionssystems mit einer elektrischen Stromquelle, um die Zirkulation von in dem flüssigen Medium vorhandenen Ionen von der Gegenelektrode zum ersten elektrischen Kontakt des Detektors bzw. umgekehrt zu gestatten,
b) Inkontaktbringen des ersten Kontakts (3) des Detektors (1) des Detektionssystems mit dem flüssigen Medium und Inkontaktbringen der Gegenelektrode (7) des Detektionssystems mit dem flüssigen Medium;
c) Detektion von Alpha-Teilchen, die in dem Substrat (2) des Detektors nach deren Durchtritt durch den ersten elektrischen Kontakt des Detektors abgeschirmt werden;
wobei das Verfahren ferner vor dem Schritt c) die nachstehenden, aufeinanderfolgenden Schritte umfasst:
- einen Schritt des Herstellens eines Elektrolyten (8), der Ionen von zumindest einem Actinoid und/oder Ionen von Polonium in Form von löslichen Komplexen enthält, die ausgehend von den Ionen zumindest eines Actinoids und/oder von den Polonium-Ionen erhalten werden, die in dem flüssigen Medium enthalten sind, durch Hinzufügen eines komplexbildenden Salzes und gegebenenfalls eines Elements ausgewählt aus einer Säure oder einer Base in dem flüssigen Medium und durch Anlegen eines elektrischen Stroms zwischen der Gegenelektrode des Detektionssystems und dem ersten elektrischen Kontakt des Detektors des Detektionssystems nach dem Schritt b),
- einen Schritt der Elektropräzipitation der Ionen der Actinoide und/oder von Polonium in Form von unlöslichen Hydroxiden der Actinoide und/oder von Polonium an dem ersten Kontakt des Detektors des Detektionssystems durch Halten des elektrischen Stroms zwischen der Gegenelektrode des Detektionssystems und dem ersten elektrischen Kontakt des Detektors des Detektionssystems, wobei die in Schritt c) detektierten Alpha-Teilchen zumindest teilweise von den unlöslichen Hydroxiden von Actinoiden und/oder Polonium stammen, die an dem ersten elektrischen Kontakt vorhanden sind.

2. Detektionsverfahren nach Anspruch 1, umfassend ferner nach dem Schritt c) einen Schritt der Dekontamination des ersten Kontakts (3) des Detektors des Detektionssystems in einem Elektrolyt durch Anlegen eines elektrischen Stroms zwischen dem ersten Kontakt und der Gegenelektrode, wobei die Stromrichtung bezüglich der Stromrichtung umgekehrt wird, die beim Schritt der Elektropräzipitation angewandt wurde.

3. Detektionsverfahren nach Anspruch 1, wobei das Inkontaktbringen des ersten Kontakts (3) des Detektors des Detektionssystems mit dem flüssigen Medium in Schritt b) durch Eintauchen des Detektors in das flüssige Medium erhalten wird.

4. Detektionsverfahren nach Anspruch 1, wobei der Elektrolyt (8) einen pH-Wert zwischen 4 und 4,5 aufweist.

5. Detektionsverfahren nach Anspruch 1, wobei das komplexbildende Salz Natriumsulfat ist.

6. Detektionsverfahren nach Anspruch 1, wobei der Elektrolyt (8) eine wässrige Lösung ist.

7. Detektionsverfahren nach Anspruch 6, wobei der Elektrolyt (8) ferner ein Lösungsmittel enthält, das ausgewählt ist aus Dimethylsulfoxid (DMSO) und Dimethylformamid (DMF).

8. Detektionsverfahren nach Anspruch 1, wobei zumindest ein Actinoid ausgewählt ist aus Isotopen von Americium, Curium, Neptunium, Plutonium und Uran.

9. Detektionsverfahren nach Anspruch 1, wobei das flüssige Medium ein Abwasser ist, beispielsweise Bodenwaschwasser oder Destillate der Verdampfung von radioaktiven Abwässern.

## Claims

1. A method for detecting the alpha activity of a liquid medium containing ions of at least one actinide and/or polonium ions, wherein said method includes the following successive steps:
a) provision of an in situ system for detecting alpha particles in a liquid medium, which includes:
- an alpha particle detector (1) including an assembly formed of a substrate made of an intrinsic semiconductor material (2) which is sandwiched between two layers made of electrically conductive materials, respectively forming a first (3) and a second (4) electrical contact, wherein the first contact is intended to be in contact with the liquid medium, and is made from boron-doped diamond;
- a counter-electrode (7) made of an electrically conductive material, intended to be brought into contact with the liquid medium; and
- means to connect said counter-electrode (7) and the first electrical contact (3) of the detection system's detector (1) to an electrical current source in order to allow the ions present in the liquid medium to flow from the counter-electrode to the detector's first electrical contact, or vice versa;
b) bringing the first contact (3) of the detection system's detector (1) into contact with the liquid medium, and bringing the detection system's counter-electrode (7) into contact with the liquid medium;
c) detection of the alpha particles which are stopped in the detector's substrate (2) after passing through said detector's first electrical contact;
wherein the method further includes, before step c), the following successive steps:
- a step of preparation of an electrolyte (8) including ions of at least one actinide and/or polonium ions in the form of soluble complexes obtained from said ions of at least one actinide and/or from said polonium ions present in the liquid medium by adding a complexing salt, and possibly an element chosen from among an acid or a base, to the liquid medium, and by applying, after step b), an electrical current between the detection system's counter-electrode and the first electrical contact of the detection system's detector;
- a step of electroprecipitation of said actinide and/or polonium ions in the form of insoluble actinide and/or polonium hydroxides on the first contact of the detection system's detector, by maintaining said electrical current between the detection system's counter-electrode and the first electrical contact of the detection system's detector, wherein the alpha particles detected in step c) derive at least partly from the insoluble actinide and/or polonium hydroxides present on the first electrical contact.

2. A detection method according to claim 1, further includes, after step c), a step of decontamination of the first contact (3) of the detection system's detector in an electrolyte by applying an electrical current between the first contact and the counter-electrode, wherein the direction of the current is reversed relative to the direction of the current applied during the step of electroprecipitation.

3. A detection method according to claim 1, wherein the first contact (3) of the detection system's detector is brought into contact with the liquid medium in step b) by immersing the detector in the liquid medium.

4. A detection method according to claim 1, wherein the electrolyte (8) has a pH of between 4 and 4.5.

5. A detection method according to claim 1, wherein the complexing salt is sodium sulphate.

6. A detection method according to claim 1, wherein the electrolyte (8) is an aqueous solution.

7. A detection method according to claim 6, wherein the electrolyte (8) also includes a solvent chosen from among dimethyl sulfoxide (DMSO) and dimethylformamide (DMF).

8. A detection method according to claim 1, wherein said at least one actinide is chosen from among the isotopes of americium, curium, neptunium, plutonium and uranium.

9. A detection method according to claim 1, wherein the liquid medium is an effluent, for example floor washing water or evaporation distillates of radioactive effluents.
